(19) Europäisches Patentamt
European Patent Office
Office européen des brevets

(11) Veröffentlichungsnummer: **0 357 554 A2**

# (12) EUROPÄISCHE PATENTANMELDUNG

(21) Anmeldenummer: **89810623.2**

(22) Anmeldetag: **22.08.89**

(51) Int. Cl.5: **C 09 B 45/14**
D 06 P 1/10

(30) Priorität: **31.08.88 CH 3238/88**

(43) Veröffentlichungstag der Anmeldung:
**07.03.90 Patentblatt 90/10**

(84) Benannte Vertragsstaaten:
**BE CH DE ES FR GB LI**

(71) Anmelder: **CIBA-GEIGY AG**
**Klybeckstrasse 141**
**CH-4002 Basel (CH)**

(72) Erfinder: **Püntener, Alois, Dr.**
**Pulverweg 13**
**D-4310 Rheinfelden (DE)**

**Burdeska, Kurt, Dr.**
**Laufenburgerstrasse 30**
**D-4058 Basel (DE)**

(54) **Metallkomplexverbindungen.**

(57) Die Verbindungen der im Anspruch 1 angegebenen Formel (1) eignen sich als Farbstoffe zum Färben von verschiedensten textilen und nicht-textilen Materialien und insbesondere zum Färben von Leder und Pelzen.

EP 0 357 554 A2

**Beschreibung**

**Metallkomplexverbindungen**

Die vorliegende Erfindung betrifft neue Metallkomplexverbindungen, Verfahren zu deren Herstellung sowie deren Verwendung zum Färben von verschiedensten textilen und nicht textilen Materialien, vor allem von Leder.

Gegenstand der Erfindung sind somit Metallkomplexverbindungen, die in Form der freien Säure der Formel

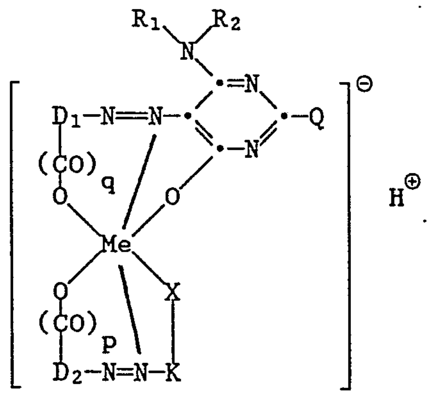

(1)

entsprechen, worin

$D_1$ und $D_2$ unabhängig voneinander den Rest einer gegebenenfalls weitersubstituierten Diazokomponente der Benzol- oder Naphthalinreihe, welcher in ortho-Stellung zur Azogruppe eine Hydroxy- oder Carboxygruppe trägt, bedeuten,

K der Rest einer gegebenenfalls weitersubstituierten Kupplungskomponente der Benzol- oder Naphthalinreihe oder der heterocyclischen Reihe ist, wobei die Kupplungskomponente die Gruppe X in ortho-Stellung zur Azogruppe trägt,

Me für Chrom oder Kobalt steht,

Q ein gegebenenfalls substituierter Phenyl- oder Naphthalinrest oder ein gegebenenfalls substituierter aromatisch-heterocyclischer Rest ist,

$R_1$ gegebenenfalls substituiertes $C_1$-$C_6$-Alkyl oder gegebenenfalls substituiertes Phenyl bedeutet, $R_2$ für Wasserstoff steht oder unabhängig die Bedeutung von $R_1$ hat,

X -O- oder -$NR_3$- und $R_3$ Wasserstoff oder $C_1$-$C_4$-Alkyl ist und p and q unabhängig voneinander je die Zahl 0 oder 1 bedeuten.

Die Diazoreste $D_1$ und $D_2$ leiten sich z.B. von einem 1- oder 2-Naphthylamin oder Aminobenzol ab, wobei die genannten aromatischen Amine jeweils in ortho-Stellung zur Aminogruppe eine Hydroxy- oder Carboxygruppe aufweisen und darüberhinaus durch einen oder mehrere gleiche oder verschiedene Reste weitersubstituiert sein können.

Geeignete Substituenten am Phenyl- oder Naphthylrest $D_1$ und $D_2$ sind z.B.: $C_1$-$C_4$-Alkyl, welches hier und im weiteren generell Methyl, Ethyl, n- oder iso-Propyl oder n-, iso-, sec.- oder tert.-Butyl umfasst; $C_1$-$C_4$-Alkoxy, worunter generell Methoxy, Ethoxy, n- oder iso-Propoxy oder n-, iso-, sec.- oder tert.-Butoxy zu verstehen ist; Halogen, womit generell Fluor, Brom und insbesondere Chlor gemeint ist; Trifluormethyl; $C_1$-$C_4$-Alkylsulfonyl, besonders Methyl- oder Ethylsulfonyl; Sulfamoyl; N-Mono- oder N,N-Di-$C_1$-$C_4$-Alkylsulfamoyl; Carbamoyl; N-Mono-oder N,N-Di-$C_1$-$C_4$-Alkylcarbamoyl, Sulfo; Nitro; Cyano; Carboxy; Phenoxy; $C_1$-$C_4$-Alkanoylamino, besonders Acetylamino, Propionylamino; Benzoylamino; $C_1$-$C_4$-Alkoxycarbonyl, z.B. Methoxy- oder Ethoxycarbonyl.

Die Reste $D_1$ und $D_2$ leiten sich beispielsweise von folgenden Aminen ab: Anthranilsäure, 4- oder 5-Chloranthranilsäure, 4- oder 5-Sulfoanthranilsäure, 2-Amino-3-naphthoesäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylamino-6-nitro-2-amino-1-hydroxybenzol, 6-Acetylamino- und 6-Chlor-4-nitro-2-amino-1-hydroxybenzol, 4- Cyan-2-amino-1-hydroxybenzol, 4-Sulfonamido-2-amino-1-hydroxybenzol, 1-Hydroxy-2-aminobenzol-4-sulfoanthranilid, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfonsäure, 6-Nitro- 2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure.

Statt der oben genannten Amine mit Hydroxygruppen kommen für $D_1$ und $D_2$ auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure oder tosyliertes

1-Hydroxy-2-aminobenzol, wobei die Methoxy- oder o-Tosylgruppe vor oder bei der Metallisierung in eine OH-Gruppe umgewandelt wird. Verbindungen mit diesen Gruppen werden vor allem dann eingesetzt, wenn die entsprechenden 1-Hydroxy-2-amino-verbindungen schlecht kuppeln.

In bevorzugten Farbstoffen der Formel (1) bedeuten $D_1$ und $D_2$ unabhängig voneinander je den Rest eines 1-Hydroxy-2-aminobenzols, welcher gegebenenfalls durch Chlor, Nitro, Sulfo, Methyl, Methoxy, Methylsulfonyl, Carbamoyl und/oder Sulfamoyl weitersubstituiert ist; dementsprechend stehen p und q jeweils bevorzugt für die Zahl 0.

Bei Q in der Bedeutung einer Phenylrestes kann es sich um unsubstituiertes oder z.B. durch $C_1$-$C_4$-Alkyl, $C_1$-$C_4$-Alkoxy, Halogen, Nitro, Cyano, $C_1$-$C_4$-Alkoxycarbonyl, $C_1$-$C_4$-Alkylsulfonyl, Sulfo oder Trihalogenmethyl substituiertes Phenyl handeln. Vorzugsweise ist hierbei der Phenylrest unsubstituiert oder durch Methyl, Isopropyl, Methoxy, Sulfo, Nitro, Chlor, Brom oder Trifluormethyl substituiert. Insbesondere bevorzugt stellt Q einen unsubstituierten Phenylrest dar.

Steht Q für Naphthyl, handelt es sich z.B. um einen unsubstituierten 1-oder 2-Naphthylrest.

Bedeutet Q einen aromatisch-heterocyclischen Rest, so kann dies z.B. ein Furanyl-, Thienyl-, Thiazolyl-, Oxazolyl-, Isothiazolyl-, Benzthiazolyl-, Benzisothiazolyl-, Pyrazolyl-, Imidazolyl-, 1,2,3-Triazolyl-, 1,2,4-Triazolyl-, 1,2,4-Thiadiazolyl, 1,3,4-Thiadiazolyl- oder 1,3,5-Triazinrest sein. Diese Reste können unsubstituiert oder z.B. durch $C_1$-$C_4$-Alkyl, Nitro, Cyano, $C_1$-$C_4$-Alkoxycarbonyl oder $C_1$-$C_4$-Alkylthio substituiert sein.

Vorzugsweise handelt es sich bei Q als aromatisch-heterocyclischem Rest um einen unsubstituierten Furanyl-, Thienyl- oder Benzthiazolylrest.

Eine besonders bevorzugte Ausführungsform der erfindungsgemässen Farbstoffe betrifft Verbindungen der Formel (1), worin Q der Phenylrest ist.

Bedeuten $R_1$ und/oder $R_2$ einen gegebenenfalls substituierten $C_1$-$C_6$-Alkylrest, so handelt es sich z.B. um einen Methyl-, Ethyl-, n- oder iso-Propyl-, n- iso-, sec.- oder tert.-Butyl- oder um einen geradkettigen oder verzweigten Pentyl- oder Hexylrest, wobei diese Reste z.B. durch Hydroxy, Sulfo, Sulfato, Carboxy, Cyano, Halogen, $C_1$-$C_4$-Alkoxycarbonyl, $C_1$-$C_4$-Alkanoyloxy oder Carbamoyl substituiert sein können und der Alkylrest mit Ausnahme von Methyl gegebenenfalls zusätzlich z.B. durch eine Gruppe -O- unterbrochen sein kann.

Beispiele für substituierte Alkylreste $R_1$ und $R_2$ sind:
Sulfomethyl, Carboxymethyl, β-Hydroxyethyl, β-Sulfoethyl, β-Sulfatoethyl, β-Cyanoethyl, β-Carboxyethyl, γ-Hydroxypropyl, γ-Sulfatopropyl, β-Hydroxy-n-butyl, β-(β-Hydroxyethoxy)-ethyl, β-(β-Sulfatoethoxy)-ethyl.

Bei $R_1$ und $R_2$ in der Bedeutung eines Alkylrestes handelt es sich unabhängig voneinander vorzugsweise je um einen unsubstituierten $C_1$-$C_4$-Alkylrest.

Handelt es sich bei $R_1$ und/oder $R_2$ um einen Phenylrest so kann dieser unsubstituiert oder z.B. durch Sulfo, Carboxy, $C_1$-$C_4$-Alkyl, $C_1$-$C_4$-Alkoxy oder Halogen substituiert sein.

$R_1$ steht besonders bevorzugt für einen unsubstituierten $C_1$-$C_4$-Alkylrest und insbesondere für den Ethyl-, n-Propyl- oder iso-Propylrest; $R_2$ bedeutet besonders bevorzugt Wasserstoff.

Eine bevorzugte Ausführungsform der vorliegenden Erfindung betrifft Verbindungen der Formel (1), worin Q Phenyl, $R_1$ $C_1$-$C_4$-Alkyl und $R_2$ Wasserstoff ist.

Bei der dem Rest K zugrunde liegenden Kupplungskomponente handelt es sich z.B. um ein unsubstituiertes oder z.B. durch $C_1$-$C_5$-Alkyl, $C_1$-$C_4$-Alkoxy, N,N-Di-$C_1$-$C_4$-Alkylamino, $C_1$-$C_4$-Alkoxycarbonylamino oder $C_1$-$C_4$-Alkanoylamino substituiertes Phenol; ein unsubstituiertes oder z.B. durch $C_1$-$C_4$-Alkyl, $C_1$-$C_4$-Alkoxy, Chlor, Amino, $C_1$-$C_4$-Alkanoylamino, Benzoylamino und/oder Sulfo substituiertes 1- oder 2-Naphthol; ein 5-Pyrazolon, welches in 1-Stellung einen unsubstituierten oder z.B. durch Chlor, Nitro, Sulfo, $C_1$-$C_4$-Alkyl und/oder $C_1$-$C_4$-Alkoxy substituierten Phenyl-oder Naphthylrest trägt; ein 6-Hydroxy-3-cyano- oder 6-Hydroxy-3-carbamoyl-2-pyridon, welches in 1-Stellung durch gegebenenfalls substituiertes $C_1$-$C_4$-Alkyl, z.B. Methyl, Isopropyl, β-Hydroxyethyl, β-Aminoethyl oder γ-Isopropoxypropyl oder durch Phenyl substituiert ist und in 4-Stellung eine $C_1$-$C_4$-Alkylgruppe, insbesondere Methyl, tragen kann; ein Acetessigsäureamid, insbesondere ein Acetessigsäureanilid oder Benzoylessigsäureanilid, welches jeweils im Anilidkern durch Chlor, Nitro, $C_1$-$C_4$-Alkyl, $C_1$-$C_4$-Alkoxy oder Sulfo substituiert sein kann; ein 1- oder 2-Naphthylamin, welches gegebenenfalls durch Sulfo, Sulfamoyl oder N-Mono- oder N,N-Di-$C_1$-$C_4$-Alkylsulfamoyl substituiert ist; oder um eine Verbindung der Formel

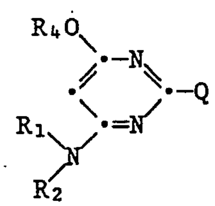

(2),

worin für $R_1$, $R_2$ und Q die zuvor angegebenen Bedeutungen und Bevorzugungen gelten und $R_4$ $C_1$-$C_4$-Alkyl oder vorzugsweise Wasserstoff bedeutet.

Der Rest K leitet sich bevorzugt von einem unsubstituierten oder durch Sulfo und/oder Amino substituierten 1- oder 2-Naphthol, einem 1-Phenyl-3-methyl-5-pyrazolon oder Acetessigsäureanilid, deren Phenylrest jeweils unsubstituiert oder z.B. durch $C_1$-$C_4$-Alkyl, $C_1$-$C_4$-Alkoxy, Chlor, Nitro und/oder Sulfo

substituiert ist, oder von einer Verbindung der oben genannten Formel (2) ab.

Beispiele für besonders bevorzugte Kupplungskomponenten, die dem Rest K zugrunde liegen können, sind:

1-Naphthol, 2-Naphthol, 1-Phenyl-3-methyl-5-pyrazolon, 1-(o-, m- oder p-Sulfophenyl)-3-methyl-5-pyrazolon oder 4-Ethylamino-, 4-n-Propylamino-oder 4-iso-Propylamino-6-hydroxy-2-phenylpyrimidin.

X steht bevorzugt für -O-.

Die Metallkomplexverbindungen der Formel (1) tragen z.B. 0 bis 4, vorzugsweise 1 bis 3 und besonders bevorzugt 1 oder 2 Sulfogruppen, wobei die Bedeutung Sulfo sowohl die freie Säureform ($-SO_3H$) als auch die Salzform umfasst.

Die erfindungsgemässen Metallkomplexverbindungen der Formel (1) werden vorteilhaft in Form ihrer Salze, insbesondere Alkali-, wie Lithium-, Kalium- und vor allem Natriumsalze oder auch Ammoniumsalze, isoliert.

Von besonderer Bedeutung wegen ihrer guten färberischen Eigenschaften sind die symmetrischen 1:2 Metallkomplexfarbstoffe, die in Form der freien Säure der Formel

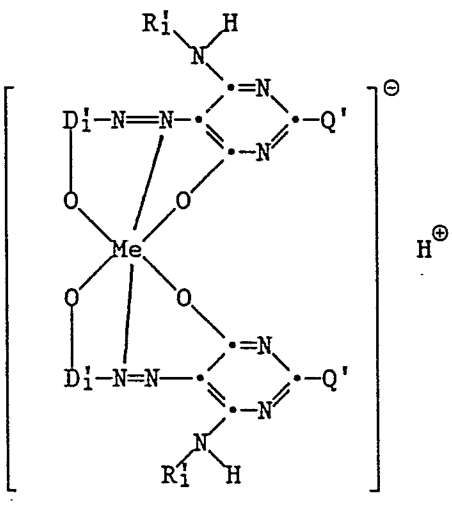

(1a)

entsprechen und 2 Sulfogruppen enthalten, worin $D_1'$ der Rest eines 1-Amino-2-hydroxybenzols, welches gegebenenfalls durch Chlor, Nitro, Sulfo, Methyl, Methoxy, Methylsulfonyl, Carbamoyl und/oder Sulfamoyl substituiert ist,

Q′ einen unsubstituierten oder durch Methyl, Isopropyl, Methoxy, Sulfo, Nitro, Chlor, Brom oder Trifluormethyl substituierten Phenylrest bedeutet,

$R_1'$ $C_1$-$C_4$-Alkyl ist und Me Kobalt oder Chrom bedeutet.

Eine weitere bevorzugte Ausführungsform der vorliegenden Erfindung betrifft asymmetrische 1:2-Chromkomplexfarbstoffe, die in Form der freien Säure der Formel

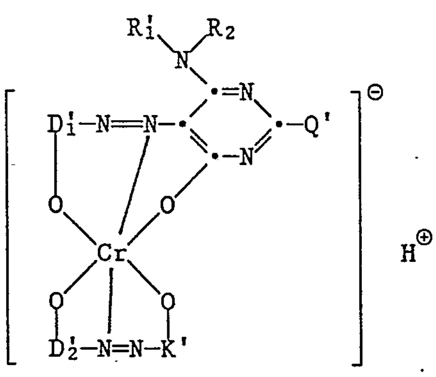

(1b)

entsprechen und 1 bis 3 Sulfogruppen enthalten, worin $D_1'$, $Q_1'$ und $R_1'$ jeweils die zuvor angegebene Bedeutung haben, $D_2'$ unabhängig die Bedeutung von $D_1'$ hat und K′ den Rest eines unsubstituierten oder durch Sulfo und/oder Amino substituierten 1- oder 2-Naphthols oder den Rest eines 1-Phenyl-3-methyl-5-pyrazolons oder Acetessigsäureanilids, deren Phenylrest jeweils unsubstituiert oder z.B. durch $C_1$-$C_4$-Alkyl, $C_1$-$C_4$-Alkoxy, Chlor, Nitro und/oder Sulfo substituiert ist, bedeutet.

Die erfindungsgemässen Verbindungen der Formel (1) können nach an sich bekannten Methoden hergestellt werden, z.B. indem man eine Azoverbindung der Formel

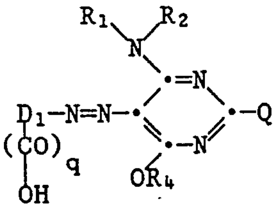

(3)

und eine Azoverbindung der Formel

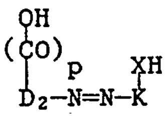

(4),

worin $D_1$, $D_2$, K, Q, $R_1$, $R_2$, $R_4$, X, p und q jeweils die zuvor angegebene Bedeutung haben, und wobei die Verbindungen der Formel (3) und (4) verschieden oder identisch sein können, mit einem kobalt- oder chromabgebenden Mittel zum 1:2-Metallkomplex umsetzt.

Falls bei dem obigen Verfahren die Verbindungen der Formel (3) und (4) verschieden sind, bilden sich Gemisch von 1:2-Metallkomplexen, die neben symmetrischen Komplexen, enthaltend 2 Moleküle Verbindung der Formel (3) bzw. (4) auch asymmetrische Komplexe enthaltend je ein Molekül der Formel (3) und (4) aufweisen.

Geeignete kobalt- oder chromabgebende Mittel sind z.B. Kobalt- oder Chromsalze oder -komplexe wie Kobaltsulfat, -acetat oder -chlorid, Chromsulfat, -acetat, -chlorid, -formiat oder -salicylat usw.

Das metallgebende Mittel wird zweckmässigerweise im Ueberschuss bezogen auf die Verbindungen der Formel (3) und (4), der z.B. 1 bis 8, vorzugsweise 1 bis 5 Mol pro Mol der Summe der Verbindungen der Formel (3) und (4) betragen kann, eingesetzt.

Die Metallisierung findet z.B. im wässrigen Medium bei einer Temperatur von 10 bis 100° C, vorlzugsweise 20 bis 60° C, und pH 3 bis 12 oder in einem polaren aprotischen Medium, z.B. in Formamid, bei einer Temperatur von z.B. 50 bis 150° C statt.

Die 1:2-Chromkomplexe der Formel (1) kann man auch herstellen, indem man den 1:1-Chromkomplex einer Verbindung der Formel (3) oder vorzugsweise eine Verbindung der Formel (4) herstellt und diesen dann mit einer nicht-metallisierten Verbindung der Formel (4) bzw. vorzugsweise der Formel (3) umsetzt. Auf diese Weise sind einheitliche asymmetrische 1:2-Chromkomplexfarbstoffe zugänglich.

Die Herstellung des 1:1-Chromkomplexes wird nach an sich bekannten Methoden durch Behandlung der einen Azoverbindung vorzugsweise in saurer Lösung mit Chrom-III-salzen durchgeführt. Anschliessend wird der erhaltene 1:1-Chromkomplex dieser Azoverbindung in schwach saurem, neutralem oder schwach alkalischem Medium mit der zweiten nichtmetallisierten Azoverbindung umgesetzt.

Die Verbindungen der Formel (4) mit Ausnahme der Verbindungen, worin K ein Rest der zuvor angegebenen Formel (2) darstellt, sind bekannt oder können in an sich bekannter Weise erhalten werden.

Die Verbindungen der Formel (3) sind neu und stellen einen weiteren Gegenstand der Erfindung dar. Sie können in an sich bekannter Weise z.B. durch Diazotierung einer Diazokomponente der Formel

$HO-(OC)_q-D_1-NH_2$ (5)

und Kupplung auf eine Verbindung der Formel

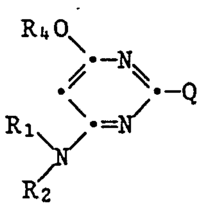

(2),

worin $D_1$, $R_1$, $R_2$, $R_4$, Q und q jeweils die zuvor angegebene Bedeutung haben, erhalten werden.

Die Diazotierung der Amine der Formel (5) und die Kupplung auf Verbindungen der Formel (2) erfolgen in an sich bekannter Weise in wässrigem oder wässrig-organischem Medium, vorzugsweise bei niedrigen Temperaturen, z.B. bei -5 bis +30° C. Die Kupplung kann in saurem, neutralem oder alkalischem Medium stattfinden, vorzugsweise jedoch in saurem Medium.

Die Verbindungen der Formel (5) sind an sich bekannt oder können in bekannter Weise erhalten werden.

Die Verbindungen der Formel (2) sind zum Teil neu; einen weiteren Gegenstand der vorliegenden Erfindung stellen daher Verbindungen der Formel (2) dar, worin für $R_2$ und Q die zuvor angegebenen Bedeutungen und Bevorzugungen gelten, $R_1$ für gegebenenfalls substituiertes $C_2$-$C_6$-Alkyl oder gegebenenfalls substituiertes Phenyl steht und $R_4$ Wasserstoff oder $C_1$-$C_4$-Alkyl ist. Die Verbindungen der Formel (2) können hergestellt werden, z.B. indem man eine Verbindung der Formel

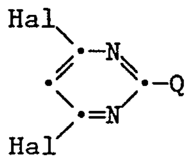

(6)

mit einem Amin der Formel

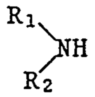

(7)

zur Verbindung der Formel

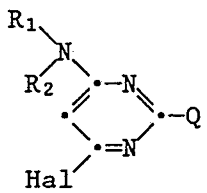

(8)

umsetzt, diese anschliessend mit einer Verbindung der Formel

$R_4'-O\ Ka^{\oplus}$ (9)

zur Verbindung der Formel (2) mit $R_4$ = $C_1$-$C_4$-Alkyl reagieren lässt und diese gegebenenfalls mittels nachfolgender Verseifung im alkalischen Medium in die Verbindung der Formel (2) mit $R_4$ = H überführt, worin Q, $R_1$ und $R_2$ die zuvor angegebene Bedeutung haben, Hal Halogen, vorzugsweise Chlor, bedeutet, $R_4'$ für $C_1$-$C_4$-Alkyl steht und $Ka^{\oplus}$ ein Kation, z.B. ein Lithium-, Natrium-, Kalium- oder Ammoniumkation bedeutet.

Die Verbindungen der Formel (6) sind z.B. aus der EP-A 0 055 693 oder 0 096 657 bekannt, oder lassen sich analog dazu herstellen.

Die Reaktion der Verbindungen (6) und (7) wird vorzugsweise in einem polaren Lösungsmittel durchgeführt, wobei z.B. $C_1$-$C_4$-Alkanole, z.B. Methanol oder Ethanol, Glykole und Glykolether wie Ethylenglykol oder Ethylenglykolmono- oder -dimethylether, Formamide, wie N,N-Dimethylformamid oder Wasser in Frage kommen; geeignet sind auch Gemische von mehreren Lösungsmitteln. Die Reaktionstemperatur liegt bei etwa 20 bis 150°C und vorlzugsweise bei 30 bis 100°C.

Die Komponenten der Formeln (6) und (7) können in stöchiometrischem Verhältnis eingesetzt werden, jedoch erweist sich ein Ueberschuss der Komponente (7) oft als günstiger.

Die weitere Umsetzung der Verbindungen der Formel (8) mit dem Alkoholat der Formel (9) erfolgt vorzugsweise in einem der oben genannten Lösungsmittel bei einer Temperatur von z.B. 60 bis 120°C. Die Komponenten (8) und (9) können in stöchiometrischen Mengen eingesetzt werden; vorzugsweise ist jedoch das Alkoholat der Formel (9) im Ueberschuss vorhanden.

Die Verseifung der Alkoxyverbindung der Formel (2) zur Hydroxyverbindung der Formel (2) findet in an sich bekannter Weise, z.B. in Gegenwart eines der obengenannten Lösungsmittel und einer starken Base, z.B. eines Alkalimetallhydroxids wie Natrium- oder Kaliumhydroxid, bei erhöhter Temperatur, z.B. 80 bis 200°C und vorzugsweise 100 bis 180°C, statt.

Die Verbindungen der Formel (1) stellen anionische Farbstoffe dar, und sind allgemein für das Färben von mit anionischen Farbstoffen anfärbbaren textilen und nicht textilen Substraten geeignet, z.B. für das Färben von Fasermaterial aus natürlicher oder regenerierter Cellulose, natürlichen oder synthetischen Polyamiden, Polyurethanen oder basisch modifizierten Polyolefinen, ferner von anodisiertem Aluminium oder von Leder und Pelzen.

Die erfindungsgemässen Farbstoffe können vorteilhaft z.B. zum Färben von Cellulosevliesstoffen, Holz und Papier eingesetzt werden. Als Fasermaterialien kommen insbesondere Baumwolle und natürliche Polyamide wie Wolle und Seide in Betracht, während bei den synthetischen Fasermaterialien solche aus den Polyamiden (z.B. Polyamid 6,6) und basisch modifizierten Polypropylenen im Vordergrund stehen.

Die erfindungsgemässen Verbindungen der Formel (1) eignen sich bevorzugt zum Färben von Pelzen und insbesondere von Leder, wobei alle Ledersorten, z.B. Chromleder, nachgegerbtes Leder oder Velourleder von Ziege, Schaf, Rind und Schwein, geeignet sind.

Man erhält Färbungen mit guten Allgemein-Echtheiten, wie Diffusions-, Licht-, Säure- und Alkaliechtheit. Die Farbstoffe der Formel (1) weisen ein gutes Ziehvermögen, eine gute Säure- und Alkalistabilität und eine gute Elektrolytbeständigkeit auf. Besondere Erwähnung verdient das gute Aufbauvermögen auf diversen Ledersorten wie Reinchromleder und nachgegerbtem Leder.

Die erfindungsgemässen Verbindungen der Formel (1) sind ausserdem geeignet als Bestandteile von Tinten und insbesondere von Aufzeichnungsflüssigkeiten für das Ink-Jet-Verfahren.

Die nachfolgenden Beispiele dienen der Erläuterung der Erfindung, ohne sie darauf zu beschränken. Teile bedeuten Gewichtsteile und Prozente Gewichtsprozente.

Herstellung der Pyrimidin-Kupplungskomponenten

Beispiel 1:

Zu einer Lösung von 115,1 g 4,6-Dichlor-2-phenylpyrimidin in 350 ml Dimethylformamid (DMF) werden innerhalb von 45 Minuten 71 g Ethylamin als 70%ige wässrige Lösung bei 25 bis 30°C zufliessen gelassen. Nach einem 30 minütigen Nachrühren erhitzt man die Reaktionslösung auf 50 bis 55°C und lässt eine Stunde bei dieser Temperatur weiterrühren. Die Lösung wird dann in Eiswasser gegeben und das anfallende Produkt mit Methylenchlorid extrahiert. Die vereinigten Methylenchlorid-Extrakte werden über Natriumsulfat getrocknet und anschliessend zur Trockne eingedampft. Es ergeben sich 112 g der Verbindung der Formel

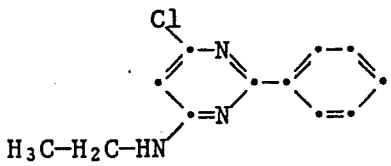
,

Schmelzpunkt 67-68°C.

Beispiel 2:

117 g 4-Ethylamino-6-chlor-2-phenylpyrimidin gemäss Beispiel 1 werden in 350 ml DMF gelöst und auf 60 bis 65°C erhitzt. Man lässt in diese Lösung 103,4 g 30 % Natriummethylatlösung innerhalb von 40 Minuten einfliessen, erhitzt dann auf 90 bis 95°C und lässt noch 2 Stunden bei dieser Temperatur nachrühren. Nach dem Abkühlen auf 40°C wird die Reaktionslösung in Eiswasser gegeben und analog zu Beispiel 1 aufgearbeitet. Man erhält 125 g der Verbindung der Formel

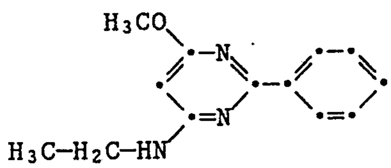

als schwach gefärbtes Oel, welches beim Stehen kristallisiert. Schmelzpunkt des kristallisierten Produkts 51°C.

Beispiel 3:

103 g 4-Ethylamino-6-methoxy-2-phenylpyrimidin gemäss Beispiel 2 werden in 350 ml Ethylenglykol eingetragen und unter Rühren mit 31,5 g Kaliumhydroxid (88 %) versetzt. Man erhitzt auf 160 bis 165°C und lässt ca. 20 Stunden bei dieser Temperatur rühren. Danach werden ca. 250 ml Ethylenglykol abdestilliert, der Rückstand mit 700 ml Wasser versetzt und auf 70°C erhitzt. Die trübe Lösung wird durch Kochen mit Aktivkohle geklärt, filtriert und anschliessend mit Salzsäure angesäuert. Das anfallende farblose Produkt wird abfiltriert, mit Wasser gewaschen und im Vakuum getrocknet. Man erhält 78,5 g der Verbindung der Formel

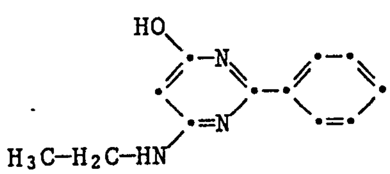

vom Schmelzpunkt 199-200°C.

Beispiele 4-5:

Verfährt man wie in den Beispielen 1 bis 3 beschrieben und verwendet anstelle von Ethylamin eine äquivalente Menge n-Propylamin oder iso-Propylamin, erhält man die Verbindungen der Formel

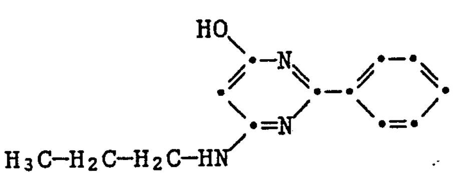

und

Schmelzpunkt 143-144°C

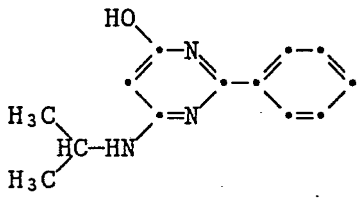

Schmelzpunkt 165-166°C in vergleichbarer Ausbeute.

<u>Beispiel 5a-5f:</u>

Analog wie in den Beipielen 1 bis 5 beschrieben, lassen sich die folgenden Verbindungen herstellen:

| Beispiel Nr. | Verbindung |
|---|---|
| 5a | 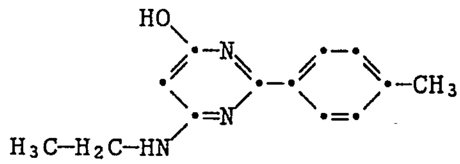 |
| 5b | 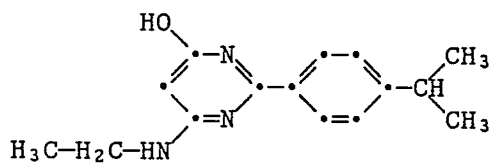 |
| 5c | 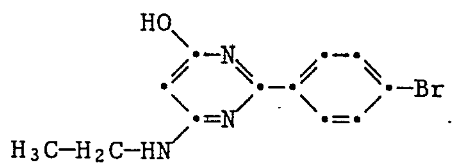 |
| 5d | 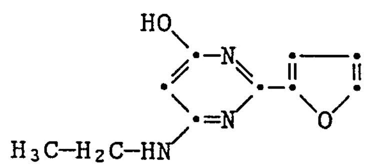 |
| 5e | 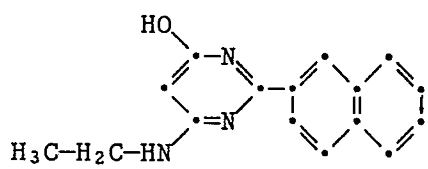 |
| 5f | 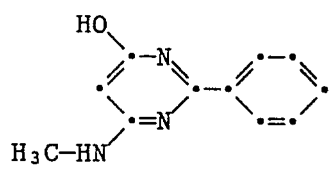 |

<u>Herstellung der Azofarbstoffe</u>

Beispiel 6:

In 400 Teile Wasser werden 58,5 Teile 2-Amino-4-nitrophenol-6-sulfonsäure eingetragen und mit Salzsäure und Natriumnitrit in üblicher Weise diazotiert.

53 Teile 4-Ethylamino-6-hydroxy-2-phenylpyrimidin gemäss Beispiel 3 werden in 30 ml DMF gelöst und bei 0 bis 5° C und pH 1,0 zu der oben bereiteten Lösung der Diazoniumverbindung getropft. Nach einem 1 stündigen Nachrühren bei 20 bis 25° C wird mit 30 % Natriumhydroxidlösung auf pH 7-8 gestellt und ca. 14 Stunden bei Raumtemperatur weitergerührt. Danach wird das Produkt abfiltriert, mit Wasser gewaschen und getrocknet. Der erhaltene Monoazofarbstoff entspricht der Formel

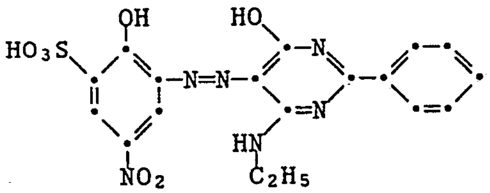 .

Beispiele 7-11g:

Verfährt man wie im Beispiel 6 beschrieben und verwendet anstelle von 2-Amino-4-nitrophenol-6-sulfonsäure und 4-Ethylamino-6-hydroxy-2-phenylpyrimidin äquivalente Mengen der in der Tabelle 1 genannten Diazo- und Kupplungskomponenten, erhält man analoge Monoazofarbstoffe:

Tabelle 1:

| Beispiel Nr. | Diazokomponente | Kupplungskomponente |
| --- | --- | --- |
| 7 | 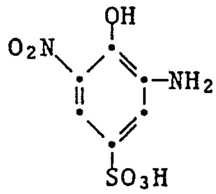 | 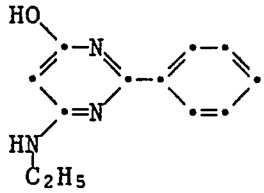 |
| 8 | 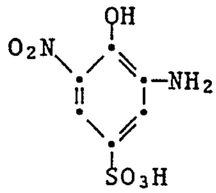 | 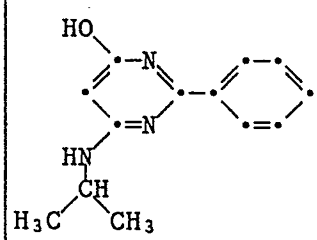 |
| 9 | 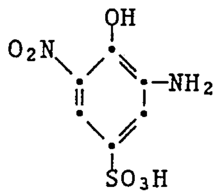 | 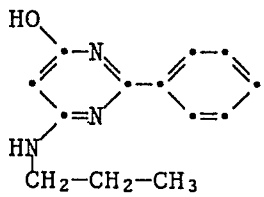 |
| 10 | 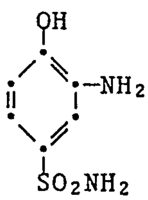 | 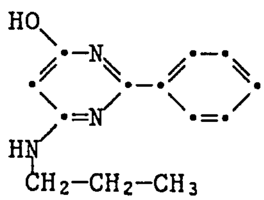 |
| 11 | 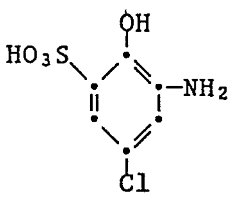 | 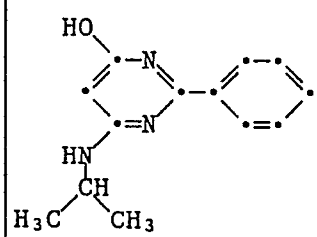 |
| 11a | 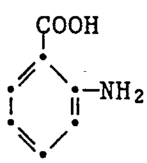 | 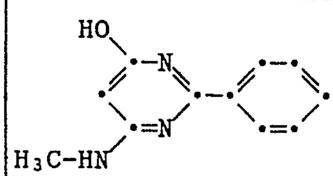 |
| 11b | 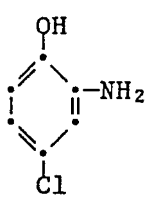 | 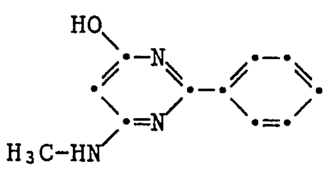 |

Tabelle 1: (Fortsetzung)

| Beispiel Nr. | Diazokomponente | Kupplungskomponente |
|---|---|---|
| 11c | 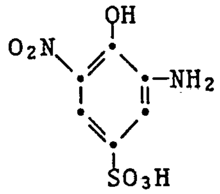 | 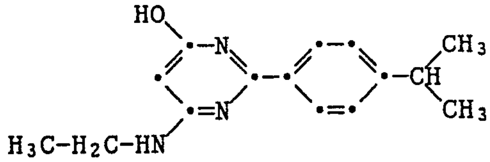 |
| 11d | 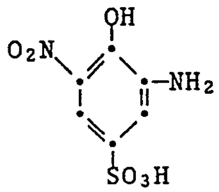 | 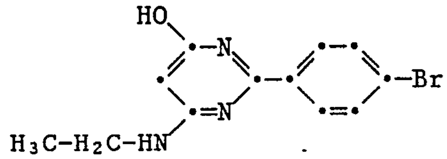 |
| 11e | 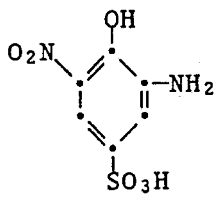 | 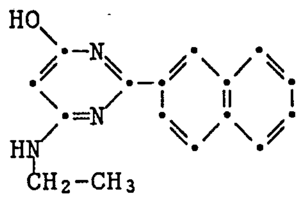 |
| 11f | 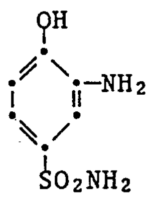 | 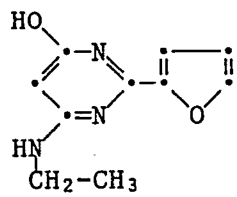 |
| 11g | 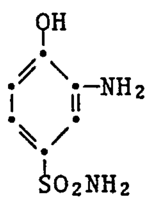 | 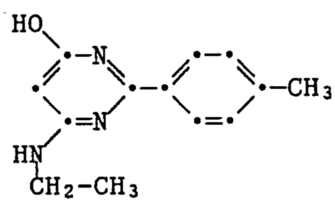 |

Herstellung der Komplexfarbstoffe

Beispiel 12:

46 Teile des gemäss Beispiel 7 erhaltenen Monoazofarbstoffes werden in 500 Teilen Formamid suspendiert und mit 1 molarer Kobaltsulfatlösung (entsprechend 3 Teilen Kobalt) versetzt. Man erhitzt auf 105 bis 110°C und lässt ca. 9 Stunden bei dieser Temperatur rühren. Der Farbstoff wird anschliessend durch Zugabe von Natriumchlorid ausgesalzen, abfiltriert und gewaschen. Nach dem Trocknen erhält man de 1:2 Kobaltkomplex des Monoazofarbstoffes der Formel

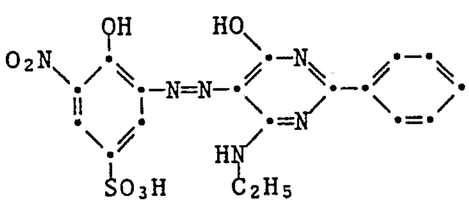

in Form von roten Kristallen; der Farbstoff färbt Leder in einer roten Nuance mit guten Allgemeinechtheiten.

Beispiel 13:

46 Teile des gemäss Beispiel 7 erhaltenen Monoazofarbstoffes werden in 450 Teilen Formamid suspendiert und mit Chromsalicylsäure (entsprechend 2,6 Teilen Chrom) versetzt. Man erhitzt auf 105-110°C und lässt ca. 2 Stunden bei dieser Temperatur rühren. Der Farbstoff wird anschliessend mit Natriumchlorid ausgesalzen, abfiltriert und gewaschen. Nach dem Trocknen erhält man den 1:2-Chromkomplex des Farbstoffes der Formel

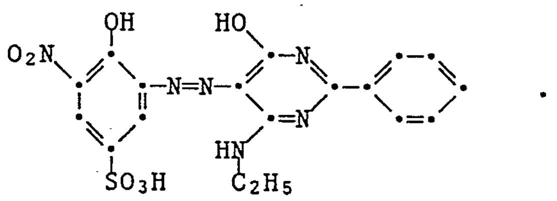

in Form von roten Kristallen; der Farbstoff färbt Leder in einer violetten Nuance mit guten Allgemeinechtheiten.

Beispiel 14-20f:

Verfährt man wie im Beispiel 12 oder 13 beschrieben und verwendet anstelle der dort benutzten Monoazofarbstoffe die in der Tabelle 2 genannten, erhält man analoge Metallkomplexfarbstoffe, welche Leder in der angegebenen Nuance färben:

Tabelle 2:

| Beispiel Nr. | Monoazofarbstoff | Metall | Nuance auf Leder |
|---|---|---|---|
| 14 | 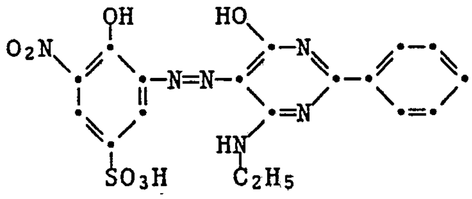 | Co | Rot |
| 15 | 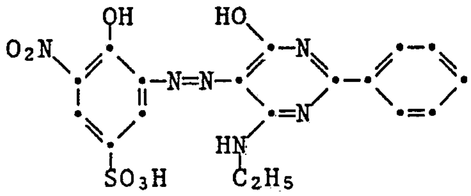 | Cr | Bordeaux |
| 16 | 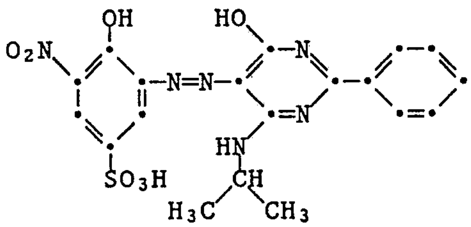 | Co | Rot |
| 17 | 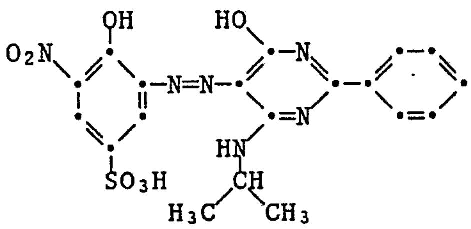 | Cr | Violett |
| 18 | 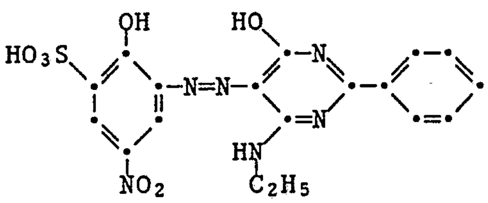 | Co | Rot |
| 19 | 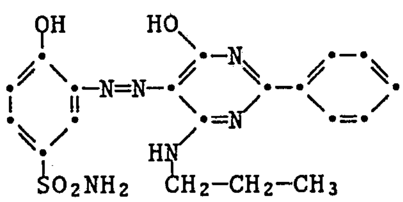 | Co | Rot |

Tabelle 2: (Fortsetzung)

| Beispiel Nr. | Monoazofarbstoff | Metall | Nuance auf Leder |
|---|---|---|---|
| 20 | 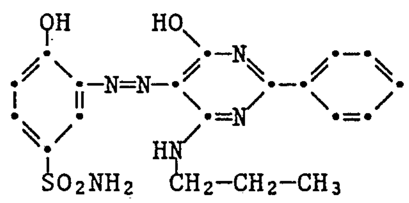 | Cr | Rubin |
| 20a | 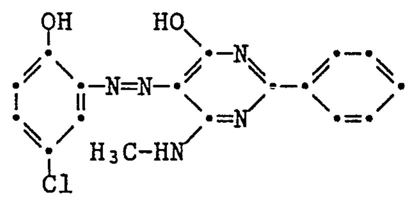 | Co | Violett |
| 20b | 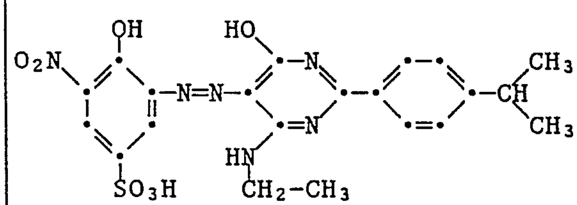 | Co | Rot |
| 20c | 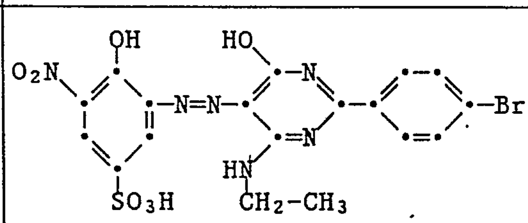 | Co | Rot |
| 20d | 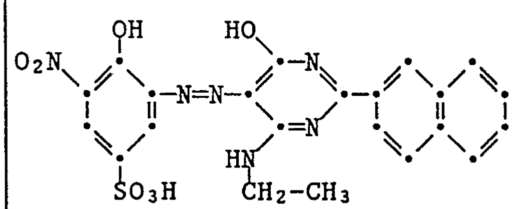 | Cr | Bordeaux |
| 20e | 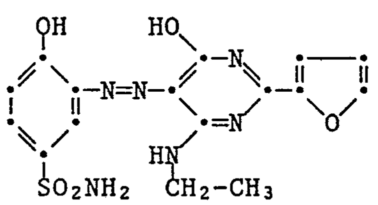 | Co | Rot |
| 20f | 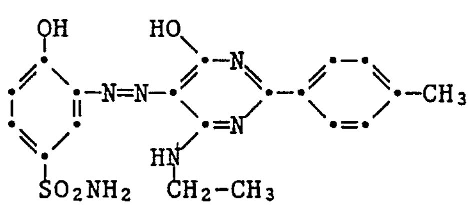 | Cr | Bordeaux |

Beispiel 21:

26 Teile der in an sich bekannter Weise hergestellten komplexen Chromverbindung vom Typus 1 Atom Chrom : 1 Molekül Monoazofarbstoff der Formel

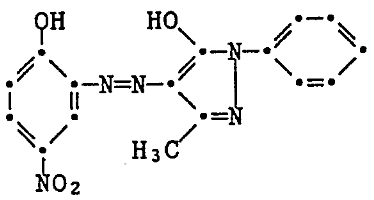

werden in 340 Teilen Formamid warm gelöst. In diese Lösung werden bei 80 bis 85°C 23 Teile des gemäss Beispiel 7 hergestellten Monoazofarbstoffes eingetragen und das Ganze 2 Stunden bei dieser Temperatur gerührt. Das Produkt wird anschliessend in bekannter Weise ausgesalzen, abfiltriert und gewaschen. Nach dem Trocknen erhält man den Farbstoff, der als freie Säure der Formel

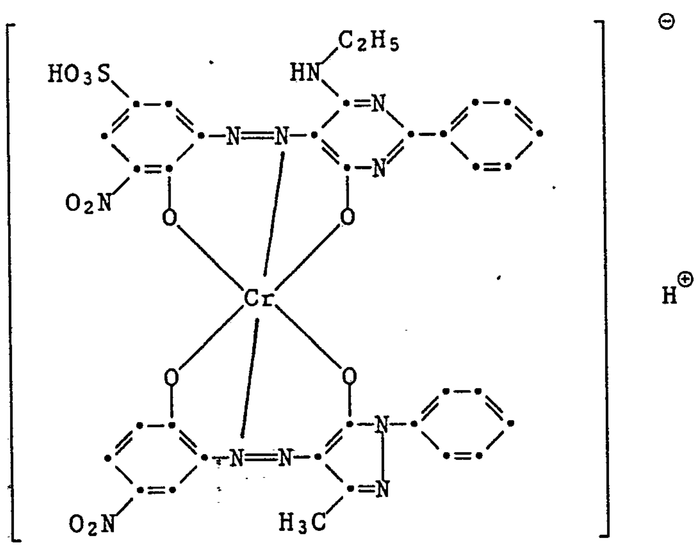

entspricht, in Form von roten Kristallen. Er färbt Leder in einer roten Nuance mit guten Allgemeinechtheiten.

Beispiele 22-28:

Verfährt man wie im Beispiel 21 beschrieben, setzt jedoch jeweils äquivalente Mengen 1:1-Chromkomplex des in der Tabelle 3 aufgelisteten Monoazofarbstoffes 1 mit dem Monoazofarbstoff 2 um, erhält man analoge 1:2 Chromkomplexfarbstoffe, die Leder in der angegebenen Nuance färben:

Tabelle 3:

| Beispiel Nr. | Monoazofarbstoff 1 | Monoazofarbstoff 2 | Nuance auf Leder |
|---|---|---|---|
| 22 | 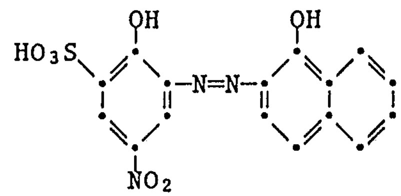 | 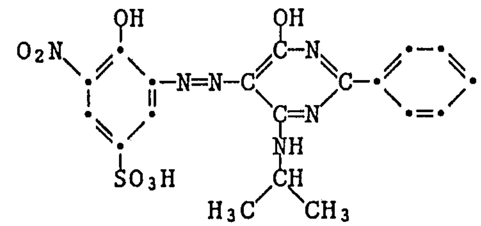 | Korinth |
| 23 | 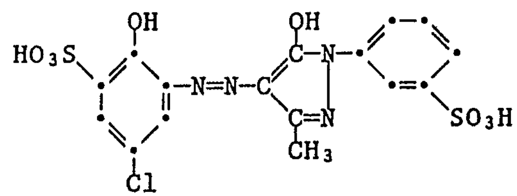 | 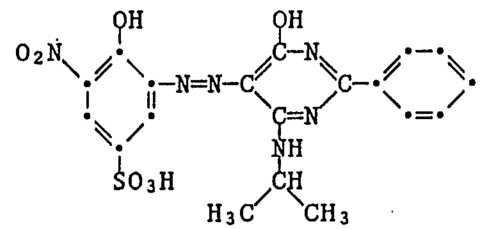 | Rubin |
| 24 | 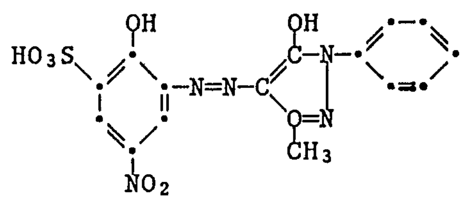 | 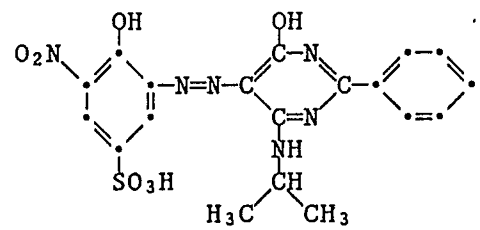 | Rubin |

Tabelle 3: (Fortsetzung)

| Beispiel Nr. | Monoazofarbstoff 1 | Monoazofarbstoff 2 | Nuance auf Leder |
|---|---|---|---|
| 25 | 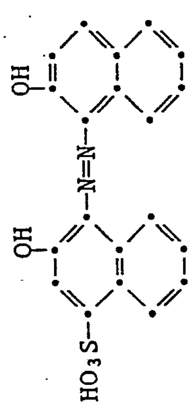 | 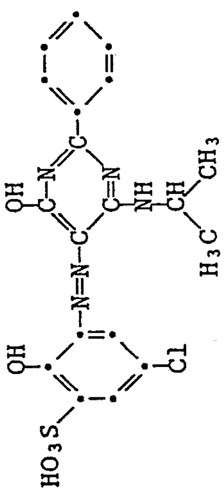 | Marine |
| 26 | 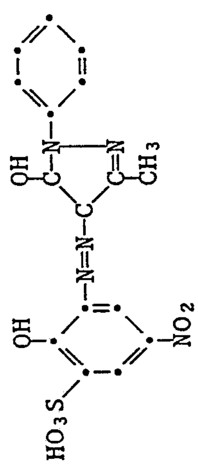 | 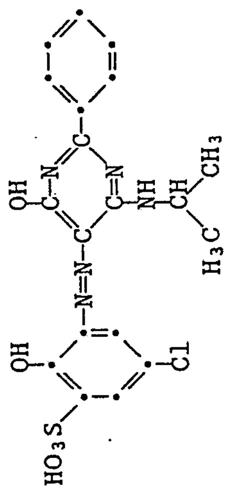 | Braun |
| 27 | 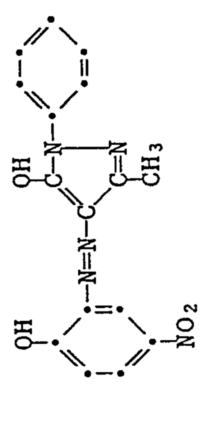 | 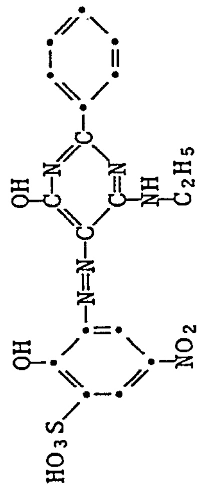 | Rot |
| 28 | 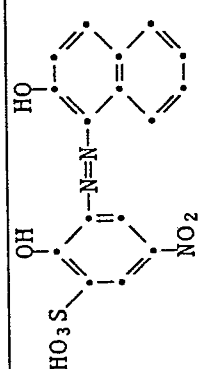 | 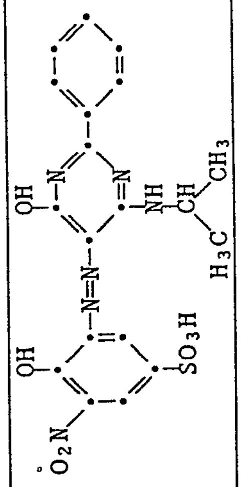 | Korinth |

**Patentansprüche**

1. Metallkomplexverbindungen, die in Form der freien Säure der Formel

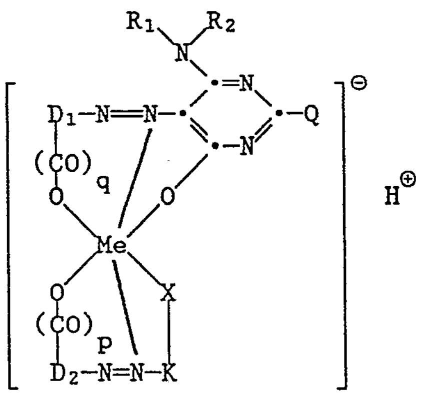

(1)

entsprechen, worin

$D_1$ and $D_2$ unabhängig voneinander der gegebenenfalls weitersubstituierten Rest einer Diazokomponente der Benzol- oder Naphthalinreihe, welcher in ortho-Stellung zur Azogruppe eine Hydroxy- oder Carboxygruppe trägt, bedeuten,

K der gegebenenfalls weitersubstituierte Rest einer Kupplungskomponente der Benzol- oder Naphthalinreihe oder der heterocyclischen Reihe ist, wobei die Kupplungskomponente die Gruppe X in ortho-Stellung zur Azogruppe trägt,

Me für Chrom oder Kobalt steht,

Q ein gegebenenfalls substituierter Phenyl- oder Naphthalinrest oder ein gegebenenfalls substituierter aromatisch-heterocyclischer Rest ist,

$R_1$ gegebenenfalls substituiertes $C_1$-$C_6$-Alkyl oder gegebenenfalls substituiertes Phenyl bedeutet, $R_2$ für Wasserstoff steht oder unabhängig die Bedeutung von $R_1$ hat,

X -O- oder -$NR_3$- und $R_3$ Wasserstoff oder $C_1$-$C_4$-Alkyl ist und p und q unabhängig voneinander je die Zahl 0 oder 1 bedeuten.

2. Metallkomplexverbindungen gemäss Anspruch 1, welche 1 bis 3 Sulfogruppen tragen.

3. Metallkomplexverbindungen gemäss Anspruch 1 oder 2, dadurch gekennzeichnet, dass $D_1$ und $D_2$ unabhängig voneinander je einen unsubstituierten oder durch $C_1$-$C_4$-Alkyl, $C_1$-$C_4$-Alkoxy, Halogen, Trifluoromethyl, $C_1$-$C_4$-Alkylsulfonyl, Sulfamoyl, N-Mono- oder N,N-Di-$C_1$-$C_4$-Alkylsulfamoyl, Carbamoyl, N-Mono- oder N,N-Di-$C_1$-$C_4$-Alkylcarbamoyl, Sulfo, Nitro, Cyano, Carboxy, Phenoxy, $C_1$-$C_4$-Alkanoylamino, Benzoylamino und/oder $C_1$-$C_4$-Alkoxycarbonyl substituierten Phenyl- oder 1- oder 2-Naphthylrest bedeuten.

4. Metallkomplexverbindungen gemäss einem der Ansprüche 1 bis 3, dadurch gekennzeichnet, dass $D_1$ und $D_2$ unabhängig voneinander je einen unsubstituierten oder durch Chlor, Nitro, Sulfo, Methyl, Methoxy, Methylsulfonyl, Carbamoyl und/oder Sulfamoyl substituierten Phenylrest bedeuten.

5. Metallkomplexverbindungen gemäss einem der Ansprüche 1 bis 4, dadurch gekennzeichnet, das p und q jeweils die Zahl 0 bedeuten.

6. Metallkomplexverbindungen gemäss einem der Ansprüche 1 bis 5, dadurch gekennzeichnet, dass Q für einen unsubstituierten oder durch $C_1$-$C_4$-Alkyl, $C_1$-$C_4$-Alkoxy, Halogen, Nitro, Cyano, $C_1$-$C_4$-Alkoxycarbonyl, $C_1$-$C_4$-Alkylsulfonyl, Sulfo oder Trihalogenmethyl substituierten Phenylrest, für den 1- oder 2-Naphthylrest oder für den Furanyl-, Thienyl- oder Benzthiazolylrest steht.

7. Metallkomplexverbindungen gemäss einem der Ansprüche 1 bis 6, dadurch gekennzeichnet, dass Q für einen unsubstituierten oder durch Methyl, Isopropyl, Methoxy, Sulfo, Nitro, Chlor, Brom oder Trifluormethyl substituierten Phenylrest steht.

8. Metallkomplexverbindungen gemäss einem der Ansprüche 1 bis 7, dadurch gekennzeichnet, dass Q Phenyl bedeutet.

9. Metallkomplexverbindungen gemäss einem der Ansprüche 1 bis 8, dadurch gekennzeichnet, dass $R_1$ ein unsubstituierter oder durch Hydroxy, Sulfo, Sulfate, Carboxy, Cyano, Halogen, $C_1$-$C_4$-Alkoxycarbonyl, $C_1$-$C_4$-Alkanoyloxy oder Carbamoyl substituierter $C_1$-$C_6$-Alkylrest oder ein unsubstituierter oder durch Sulfo, Carboxy, $C_1$-$C_4$-Alkyl, $C_1$-$C_4$-Alkoxy oder Halogen substituierter Phenylrest ist und $R_2$ unabhängig die Bedeutung von $R_1$ hat oder für Wasserstoff steht.

10. Metallkomplexverbindungen gemäss einem der Ansprüche 1 bis 9, dadurch gekennzeichnet, dass $R_1$ ein $C_1$-$C_4$-Alkylrest und $R_2$ Wasserstoff ist.

11. Metallkomplexverbindungen gemäss einem der Ansprüche 1 bis 10, dadurch gekennzeichnet, dass Q Phenyl, $R_1$ $C_1$-$C_4$-Alkyl und $R_2$ Wasserstoff ist.

12. Metallkomplexverbindungen gemäss einem der Ansprüche 1 bis 11, dadurch gekennzeichnet, dass K der Rest eines unsubstituierten oder durch $C_1$-$C_5$-Alkyl, $C_1$-$C_4$-Alkoxy, N,N-Di-$C_1$-$C_4$-Alkylamino, $C_1$-$C_4$-Alkoxycarbonylamino und/oder $C_1$-$C_4$-Alkanoylamino substituierten Phenols; eines unsubstituierten oder durch $C_1$-$C_4$-Alkyl, $C_1$-$C_4$-Alkoxy, Chlor, Amino, $C_1$-$C_4$-Alkanoylamino, Benzoylamino und/oder Sulfo substituierten 1- oder 2-Naphthols; eines 5-Pyrazolons, welches in 1-Stellung einen unsubstituierten oder durch Chlor, Nitro, Sulfo, $C_1$-$C_4$-Alkyl und/oder $C_1$-$C_4$-Alkoxy substituierten Phenyl- oder Naphthylrest trägt; eines 6-Hydroxy-3-cyano-oder 6-Hydroxy-3-carbamoyl-2-pyridons, welches in

1-Stellung einen gegebenenfalls substituierten $C_1$-$C_4$-Alkylrest trägt und in 4-Stellung gegebenenfalls durch $C_1$-$C_4$-Alkyl substituiert ist; eines Benzoylessigsäure- oder Acetessigsäureanilids, welches im Anilidkern unsubstituiert oder durch Chlor, Nitro, $C_1$-$C_4$-Alkyl, $C_1$-$C_4$-Alkoxy der Sulfo substituiert ist; eines unsubstituierten oder durch Sulfo, Sulfamoyl oder N-Mono- oder N,N-Di-$C_1$-$C_4$-Alkylsulfamoyl substituierten 1-oder 2-Naphthylamins; oder der Rest einer Verbindung der Formel

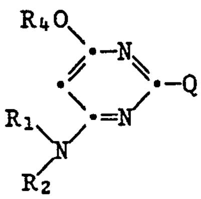

(2),

worin $R_1$, $R_2$ und Q die im Anspruch 1 angegebene Bedeutung haben und $R_4$ Wasserstoff oder $C_1$-$C_4$-Alkyl bedeutet, ist.

13. Metallkomplexverbindungen gemäss einem der Ansprüche 1 bis 12, dadurch gekennzeichnet, dass K der Rest eines unsubstituierten oder durch Sulfo und/oder Amino substituierten 1- oder 2-Naphthols; eines 1-Phenyl-3-methyl-5-pyrazolons oder Acetessigsäureanilids, deren Phenylrest jeweils unsubstituiert oder durch $C_1$-$C_4$-Alkyl, $C_1$-$C_4$-Alkoxy, Chlor, Nitro und/oder Sulfo substituiert ist; oder einer Verbindung der im Anspruch 12 angegebenen Formel (2) ist.

14. Metallkomplexverbindungen gemäss Anspruch 13, dadurch gekennzeichnet, dass es sich bei K um den Rest von 1-Naphthol, 2-Naphthol, 1-Phenyl-3-methyl-5-pyrazolon, 1-(o-, m- oder p-Sulfophenyl)-3-methyl-5-pyrazolon oder um den Rest von 4-Ethylamino-, 4-n-Propylamino- oder 4-iso-Propylamino-6-hydroxy-2-phenylpyrimidin handelt.

15. Metallkomplexverbindungen gemäss einem der Ansprüche 1 bis 14, dadurch gekennzeichnet, dass X -O- bedeutet.

16. Metallkomplexverbindungen gemäss Anspruch 1, welche in Form der freien Säure der Formel

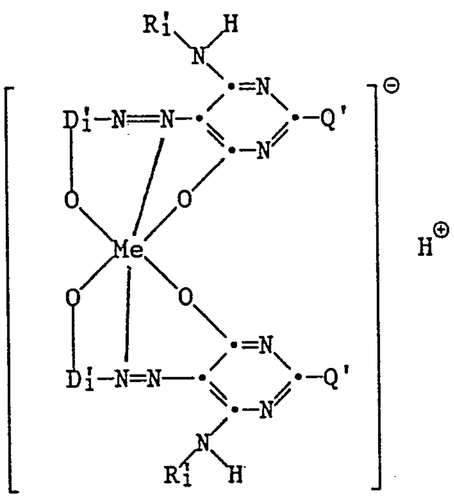

(1a)

entsprechen und 2 Sulfogruppen enthalten, worin

$D_1'$ der Rest eines 1-Amino-2-hydroxybenzols, welches gegebenenfalls durch Chlor, Nitro, Sulfo, Methyl, Methoxy, Methylsulfonyl, Carbamoyl und/oder Sulfamoyl substituiert ist,

Q′ einen unsubstituierten oder durch Methyl, Isopropyl, Methoxy, Sulfo, Nitro, Chlor, Brom oder Trifluormethyl substituierten Phenylrest bedeutet,

$R_1'$ $C_1$-$C_4$-Alkyl ist und Me Kobalt oder Chrom bedeutet.

17. Metallkomplexverbindungen gemäss Anspruch 1, welche in Form der freien Säure der Formel

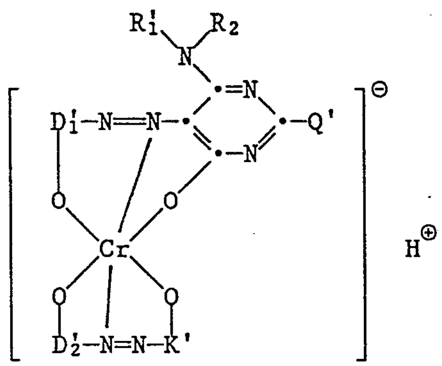

(1b)

entsprechen und 1 bis 3 Sulfogruppen enthalten, worin $D'_1$, $Q'_1$ und $R'_1$ jeweils die im Anspruch 16 angegebene Bedeutung haben, $D'_2$ unabhängig die Bedeutung von $D'_1$ hat und K′ den Rest eines unsubstituierten oder durch Sulfo und/oder Amino substituiert 1- oder 2-Naphthols oder den Rest eines 1-Phenyl-3-methyl-5-pyrazolons oder Acetessigsäureanilids, deren Phenylrest jeweils unsubstituiert oder z.B. durch $C_1$-$C_4$-Alkyl, $C_1$-$C_4$-Alkoxy, Chlor, Nitro und/oder Sulfo substituiert ist, bedeutet.

18. Verfahren zur Herstellung von Metallkomplexverbindungen der Formel (1) gemäss Anspruch 1, dadurch gekennzeichnet, dass man eine Azoverbindung der Formel

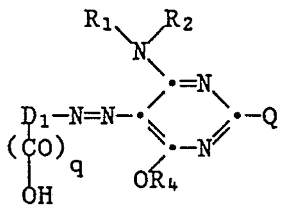

(3)

und eine Azoverbindung der Formel

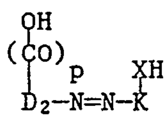

(4),

worin $D_1$, $D_2$, K, Q, X, $R_1$, $R_2$, $R_4$, p und q jeweils die im Anspruch 1 angegebene Bedeutung haben, und wobei die Verbindungen der Formel (3) und (4) verschieden oder identisch sein können, mit einem kobalt- oder chromabgebenden Mittel zum 1:2-Metallkomplex umsetzt.

19. Verfahren zur Herstellung von Metallkomplexverbindungen der Formel (1) gemäss Anspruch 1, worin Me Chrom bedeutet, dadurch gekennzeichnet, dass man den 1:1-Chromkomplex einer Verbindung der im Anspruch 18 angegebenen Formel (3) oder (4) herstellt und diesen dann mit einer nicht-metallisierten Verbindung der Formel (4) oder (3) zum 1:2-Komplex umsetzt.

20. Verwendung von Verbindungen der Formel (1) als Farbstoffe zum Färben von Fasermaterialien aus natürlicher oder regenerierter Cellulose, natürlichen oder synthetischen Polyamiden, Polyurethanen oder basisch modifizierten Polyolefinen, von anodisiertem Aluminium oder von Pelzen und Leder.

21. Verwendung gemäss Anspruch 20, dadurch gekennzeichnet, dass man Pelze und Leder färbt.

22. Verbindungen der Formel

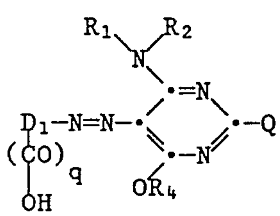

(3)

worin $D_1$, $R_1$, $R_2$, q und Q die im Anspruch 1 angegebene Bedeutung haben und $R_4$ Wasserstoff oder $C_1$-$C_4$-Alkyl bedeutet.

23. Verbindungen der Formel

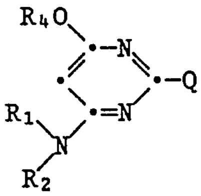

(2),

worin $R_2$ und Q die im Anspruch 1 angegebene Bedeutung haben, $R_1$ gegebenenfalls substituiertes $C_2$-$C_6$-Alkyl oder gegebenenfalls substituiertes Phenyl bedeuten und $R_4$ Wasserstoff oder $C_1$-$C_4$-Alkyl ist.